Europäisches Patentamt

European Patent Office

Office européen des brevets

(11) Veröffentlichungsnummer: **0 055 000**
**B1**

(19)

(12) **EUROPÄISCHE PATENTSCHRIFT**

(45) Veröffentlichungstag der Patentschrift:
31.10.84

(21) Anmeldenummer: 81201352.2

(22) Anmeldetag: 11.12.81

(51) Int. Cl.³: **F 24 F 7/08,** F 24 D 3/00,
F 25 B 29/00

(54) Vorrichtung zum Belüften und Heizen von Innenräumen.

(30) Priorität: 19.12.80 DE 3047890

(43) Veröffentlichungstag der Anmeldung:
30.06.82 Patentblatt 82/26

(45) Bekanntmachung des Hinweises auf die Patenterteilung:
31.10.84 Patentblatt 84/44

(84) Benannte Vertragsstaaten:
DE FR GB IT SE

(56) Entgegenhaltungen:
DE - A - 2 133 728
DE - A - 2 336 667
DE - A - 3 006 318
FR - A - 817 426
FR - A - 2 196 452
GB - A - 2 014 720
US - A - 4 071 080

(73) Patentinhaber: Philips Patentverwaltung GmbH,
Billstrasse 80, D-2000 Hamburg 28 (DE)
(84) Benannte Vertragsstaaten: DE

(73) Patentinhaber: N.V. Philips' Gloeilampenfabrieken,
Groenewoudseweg 1, NL-5621 BA Eindhoven (NL)
(84) Benannte Vertragsstaaten: FR GB IT SE

(72) Erfinder: Hörster, Horst, Dr., Vogelsangstrasse 11,
D-5106 Roetgen (DE)
Erfinder: Klingenberg, Klaus, Waldstrasse 39,
D-5100 Aachen (DE)

(74) Vertreter: Kupfermann, Fritz-Joachim et al, Philips
Patentverwaltung GmbH
Billstrasse 80 Postfach 10 51 49,
D-2000 Hamburg 28 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Vorrichtung zum Belüften und Heizen von Innenräumen, insbesondere Wohnräumen, mit von außen in den Innenraum und aus dem Innenraum nach außen führenden Frischluft- und Abluftkanälen, die durch einen Luft/Luft-Wärmetauscher führen, wobei im Frischluftkanal ein erstes Gebläse zum Einblasen von Luft in den Innenraum und wobei zwischen dem Frischluft- und Abluftkanal vor und hinter dem Wärmetauscher einstellbare Nebenschlüsse vorgesehen sind.

Eine derartige Vorrichtung ist aus der GB-A-2 014 720 bekannt. Die Frischluft wird durch einen Luftkanal mit Hilfe eines Gebläses in den Innenraum gedrückt. Von innen strömt die Abluft gebläselos durch einen Abluftkanal nach außen. Zuluft und Ablaufkanäle nehmen einen Wärmetauscher auf, der die Wärme der Abluft an die Frischluft abgibt.

In die Trennwand zwischen die nebeneinander verlaufenden Frisch- und Abluftkanäle sind verschiebbare Nebenschlüsse eingebaut, und zwar vor und hinter dem Wärmetauscher. Auch sind die Ansaug- und Ausblasöffnungen verschließbar. Auf diese Weise wird es möglich, bei geschlossenen Ansaug- und Ausblasöffnungen sowie geöffneten Nebenschlüssen einen reinen inneren Umluftbetrieb einzuführen, wobei noch ein Kondensator einer irgendwo außerhalb aufgestellten Wärmepumpe oder eines Warmwassertanks im Frischluftkanal Wärme abgeben kann. Die Vorrichtung allein kann zusätzliche Wärmeenergie nicht beschaffen.

Aus der US-A-4 071 080 ist eine Heizvorrichtung bekannt, bei der die Abluft eines Raumes vom Verdampfer einer Wärmepumpe ausgewertet wird. Diese Wärmemengen sind begrenzt und lassen sich einfacher durch einen Wärmetauscher verwerten.

Schließlich ist es noch aus der DE-A-2 133 728 bekannt, eine Gegenstromwärmeaustauschung mittels Wirbelzellenblechen herbeizuführen, wobei außenseitig zwischen den Kanälen Luftleitklappen vorgesehen sind. Mit Hilfe dieser Luftleitklappen wird eine Vermischung der Frisch- und Abluftströme bewirkt. Außerdem läßt sich damit der Abluftstrom drosseln, was in Viehställen Bedeutung hat.

Ungelöst bleibt das Problem der Wärmezufuhr zu einem Raum, wenn die Wärmerückgewinnung allein nicht ausreicht. Wenn auch der größte Teil der mit der Abluft abgeführten Wärmeenergie über den Wärmetauscher und den Zuluftkanal wieder in den Innenraum zurückgeführt wird, so reicht die wiedergewonnene Wärme insbesondere bei niedrigen Temperaturen nicht aus, um in dem belüfteten Raum eine bestimmte gewünschte Raumtemperatur aufrechtzuerhalten. Es ist erforderlich, diese zusätzlich benötigte Wärmeenergie über eine Zusatzheizung bereitzustellen.

Es ist Aufgabe der Erfindung, eine Vorrichtung zum Luftaustausch derart auszubilden, daß sie gleichzeitig die Raumheizungsfunktion mit übernimmt und selbst mit allen zur Heizung notwendigen Aggregaten ausgerüstet ist, wobei die Zusatzenergie der Außenluft entzogen werden soll.

Die gestellte Aufgabe ist erfindungsgemäß dadurch gelöst, daß

— zu einem reinen Luft/Luft-Wärmepumpenheizbetrieb sowohl der Frischluft- als auch der Abluftkanal im Bereich des Wärmetauschers schließbar sind, so daß dann bei geöffnetem Nebenschluß vor dem Wärmetauscher mittels eines zweiten Gebläses Frischluft von der Ansaugöffnung zur Ausblasöffnung förderbar ist, die dabei durch den Verdampfer der Wärmepumpe hindurchströmt, während gleichzeitig bei geöffnetem Nebenschluß hinter dem Wärmetauscher vom ersten Gebläse ein den Kondensator der Wärmepumpe durchströmender Umluftstrom von der Absaugöffnung zur Einblasöffnung erzeugt wird,

— zum reinen Belüften die Nebenschlüsse geschlossen und die Frischluft- und Abluftkanäle geöffnet sind, so daß die Gebläse über die Kanäle einen reinen Luftaustausch mit Wärmeaustausch im Wärmeaustauscher vornehmen,

— zum Mischbetrieb aus Heizen und Belüften die Nebenschlüsse und die Querschnitte der Kanäle teilweise geöffnet sind.

Mit Hilfe der Vorrichtung nach der Erfindung kann einem Wohnraum eine dosierte, dem Bedarf angepaßte Frischluftmenge zugeführt werden (0,5 bis 1,5 V/h) und wird der Heizbedarf durch die Wärmepumpe gedeckt, die unabhängig von Frisch- und Abluftmenge, entweder der Abluft oder der Außenluft oder einem Gemisch von beiden die Wärmeenergie entzieht und dem Innenraum zuführt. Nach einer weiteren Ausgestaltung der Erfindung ist der Kondensator im zum Innenraum führenden Frischluftkanal angeordnet. Es ist aber ebensogut auch möglich, den Kondensator in Form eines Rohrnetzes an einer oder mehreren, an den Innenraum grenzenden Gehäusewänden in gutem thermischem Kontakt mit den Gehäusewänden anzuordnen. Während die Wärmezufuhr bei der Anordnung des Kondensators im Frischluftkanal über die eingeführte Frischluft vorgenommen wird, erfolgt die Raumerwärmung bei der Anordnung des Kondensators an den Gehäusewänden durch Konvektion oder Wärmestrahlung.

Als vorteilhaft erweist es sich nach einer weiteren Ausgestaltung der Erfindung, wenn zwei Kondensatoren vorgesehen werden, und zwar sowohl im Frischluftkanal als auch in Form eines Rohrnetzes an den Gehäusewänden.

Der Einsatz von zwei Kondensatoren bringt den weiteren Vorteil mit sich, daß den Klimatisierungsbedürfnissen entsprechend die Möglichkeit geschaffen wird, beide Kondensatoren gleichzeitig oder unabhängig voneinander zu betreiben.

Die Vorrichtung kann in verschiedener Weise betrieben werden. Eine Betriebsweise besteht dabei in herkömmlicher Weise in der Raumlüftung mit Wärmerückgewinnung, wobei die Wärmepumpen ausgeschaltet bleiben und die Luftmenge innerhalb beispielsweise dreier Stufen (0,5 ... 1,0 ... 1,5 V/h) fest oder nach einem vorgesehenen Programm einstellbar sind.

Wenn die Wärmerückgewinnung durch den Wärmetauscher nicht ausreicht, dann wird die Wärmepumpe zusätzlich in Betrieb genommen. In einer Stufe I für erhöhten Raumbedarf arbeitet ein Kompressor auf den gemeinsamen Verdampfer und beispielsweise den Kondensator im Frischluftkanal. Bei größerem Heizbedarf arbeitet in einer Stufe II zusätzlich der zweite Kompressor auf den Verdampfer und den Kondensator an der Gehäusewand. Die Luftmenge am Verdampfer läßt sich durch die Wahl der Drehzahl des Ventilators im Abluftkanal regeln. Um für den Verdampfer genügend Luftwärmeenergie bereitzuhalten, werden dabei gleichzeitig die Querschnitte des Abluftkanals und des Nebenschlusses vor dem Wärmetauscher, d. h. außenseitig, als Funktion der Temperaturdifferenz zwischen Außentemperatur und Ablufttemperatur eingestellt. Außerdem wird die Luftmenge am Kondensator im Frischluftkanal zu gleicher Zeit durch Regelung der Ventilatordrehzahl im Frischluftkanal an die veränderten Abluftbedingungen angepaßt durch Veränderung des Querschnittes in dem innenseitigen Nebenschluß und des Querschnittes im Frischluftkanal. Diese Regelung erfolgt als Funktion der Temperaturdifferenz der dem Raum zugeführten Frischluft und der Raumluft.

Die Querschnittsveränderung von Frisch- und Abluftkanal sowie in den Nebenschlüssen erfolgt vorzugsweise durch Luftklappen.

Eine weitere Betriebsweise der Vorrichtung besteht darin, daß auf die Raumlüftung verzichtet werden und nur geheizt werden kann. In diesem Fall sind die Luftklappen in dem Frischluft- und Abluftkanal geschlossen, und nur die Nebenschlüsse vor und hinter dem Wärmetauscher sind geöffnet. Es erfolgt also nur ein Umluftbetrieb.

Schließlich ist auch noch eine Betriebsweise möglich, bei der mit Kontrolle der Luftfeuchtigkeit geheizt wird. In diesem Fall wird trockene Außenluft dem Raum in der Weise zugeführt, daß ein gewünschter Feuchtebereich eingehalten wird.

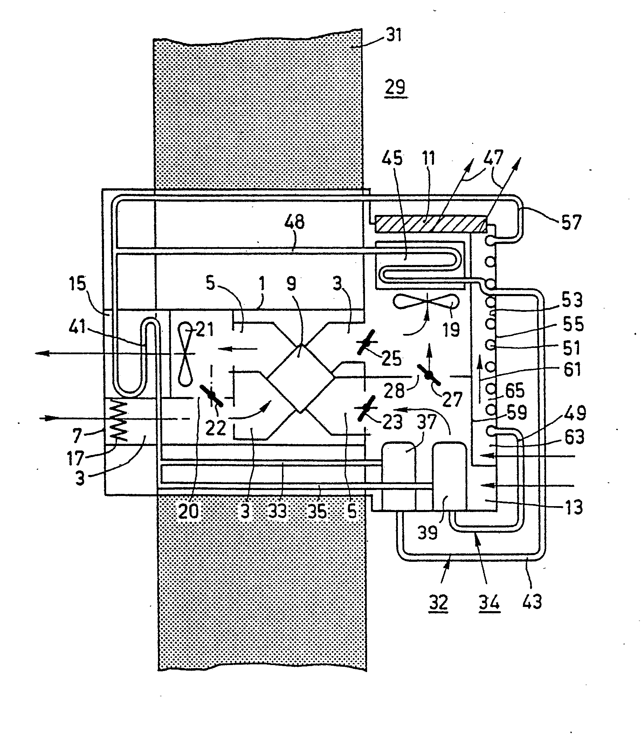

Die Erfindung wird anhand des in der Zeichnung dargestellten Ausführungsbeispieles näher erläutert.

In einem Gehäuse 1 sind ein Frischluftkanal 3 und ein Abluftkanal 5 vorgesehen. Der Frischluftkanal 3 erstreckt sich von der außenseitigen Ansaugöffnung 7 über einen Wärmetauscher 9 zu einer Einblasöffnung 11. Der Abluftkanal 5 erstreckt sich von einer Absaugöffnung 13 am Innenraum über den Wärmetauscher 9 zur Ausblasöffnung 15. Im Bereich der Ansaugöffnung 7 befindet sich ein Frischluftfilter 17.

Die Frischluft wird mit Hilfe eines Gebläses 19 in den Innenraum gesaugt, während die Abluft mittels eines Gebläses 21 nach außen abgesaugt wird. Die Gebläse 19, 21 sind nur schematisch in Form von Luftschrauben angedeutet. Zwischen dem Frischluftkanal 3 und dem Abluftkanal 5 befindet sich vor dem Luft/Luft-Wärmetauscher 9 außenseitig in einem Nebenschluß 20 eine Luftklappe 22, die die Kanäle 3, 5 in geschlossener Stellung vollständig trennt und in geöffneter Stellung einen außenseitigen Luftkurzschluß zwischen Ansaugöffnung 7 und Abblasöffnung 15 herstellt.

In dem Abluftkanal 5 befindet sich eine Luftklappe 23. Entsprechend ist im Frischluftkanal 3 eine Luftklappe 25 vorgesehen. Bei geschlossenen Klappen 23 und 25, d. h. bei geschlossenen Frisch- und Abluftkanälen 3, 5, ist es möglich, eine innenseitige Umluftklappe 27 zu öffnen, wodurch sich ein innenseitiger Umluftkanal 28 ausbildet, mit dem eine Luftumwälzung im Innenraum 29 möglich ist. Die Vorrichtung kann beispielsweise in eine Außenwand 31 eingebaut sein.

In der Vorrichtung sind zwei Wärmepumpenkreisläufe vorgesehen. Zu diesen beiden Wärmepumpenkreisläufen 32 und 34 gehören je ein Kompressor 37 und 39, die beispielsweise im Abluftkanal 5 angeordnet sind. Ihre Abwärme kann dadurch wieder nutzbar gemacht werden. Beiden Wärmepumpenkreisläufen 32, 34 gemeinsam ist ein Verdampfer 41, der sich in dem Abluftkanal 5 im Bereich der Ausblasöffnung 15 befindet. Der aus dem Verdampfer 41 kommende Kältemitteldampf strömt durch die Leitungen 33 und 35 zu den Kompressoren 37 und 39. Der komprimierte Dampf aus dem Kompressor 37 des Kreislaufes 32 strömt durch eine Rohrleitung 43 zu einem schematisch angedeuteten Kondensator 45 im Bereich der Einblasöffnung 11. Die durch den Kondensator 45 in Pfeilrichtung 47 strömende Luft erwärmt bei eingeschaltetem Kompressor 37 den Innenraum 29. Nach dem Verlassen des Kondensators 45 strömt das kondensierte Kältemittel durch eine Rohrleitung 48 zu dem Verdampfer 41. Der zweite Wärmepumpenkreislauf 34 verläuft über den Kompressor 39 und eine Rohrleitung 49 zu einem Rohrsystem 51, welches an der Innenseite 53 einer Gehäusewand 55 angeordnet ist. Nach dem Verlassen des Rohrnetzes 51 strömt das Kältemittel durch eine Rohrleitung 57 zu dem gemeinsamen Verdampfer 41. Gegenüber der Innenseite 53 der Gehäusewand 55 und in einem Abstand von ihr befindet sich ein Leitblech 59, welches einen zusätzlichen Heizumluftkanal 65 bildet. Die von den Rohrleitungen 51 an der Innenseite abgegebene Wärme wird von einer Luftströmung 61 aufgenommen, die durch einen Lufteinlaß 63 in den Kanal 65 eintritt und am oberen Ende des Kanales 65 neben der Einblasöffnung 11 austritt.

## Patentansprüche

1. Vorrichtung zum Belüften und Heizen von Innenräumen, insbesondere Wohnräumen, mit von außen in den Innenraum (29) und aus dem Innenraum (29) nach außen führenden Frischluft- (3) und Abluftkanälen (5), die durch einen Luft/ Luft-Wärmetauscher (9) führen, wobei im Frischluftkanal (3) ein erstes Gebläse (19) zum Einblasen von Luft in den Innenraum (29) und wobei zwischen dem Frischluft- (3) und Abluftkanal (5) vor und hinter dem Wärmetauscher (9) einstellbare Nebenschlüsse (20, 28) vorgesehen sind, dadurch gekennzeichnet, daß

— zu einem reinen Luft/Luft-Wärmepumpenheizbetrieb sowohl der Frischluft- (3) als auch der Abluftkanal (5) im Bereich des Wärmetauschers (9) schließbar sind, so daß dann bei geöffnetem Nebenschluß (20) vor dem Wärmetauscher (9) mittels eines zweiten Gebläses (21) Frischluft von der Ansaugöffnung (7) zur Ausblasöffnung (15) förderbar ist, die dabei durch den Verdampfer (41) der Wärmepumpe hindurchströmt, während gleichzeitig bei geöffnetem Nebenschluß (28) hinter dem Wärmetauscher (9) vom ersten Gebläse (19) ein den Kondensator (45) der Wärmepumpe durchströmender Umluftstrom von der Absaugöffnung (13) zur Einblasöffnung (11) erzeugt wird,
— zum reinen Belüften die Nebenschlüsse (22, 28) geschlossen und die Frischluft- (3) und Abluftkanäle (5) geöffnet sind, so daß die Gebläse (19, 21) über die Kanäle (3, 5) einen reinen Luftaustausch mit Wärmeaustausch im Wärmeaustauscher (9) vornehmen,
— zum Mischbetrieb aus Heizen und Belüften die Nebenschlüsse (20, 28) und die Querschnitte der Kanäle (3, 5) teilweise geöffnet sind.

2. Vorrichtung nach Anspruch 1, dadurch gekennzeichnet, daß zwei Wärmepumpenkreisläufe (32, 34) mit einem Kompressor (37) für einen Kondensator (45) im zum Innenraum (29) führenden Frischluftkanal (3) und einem weiteren Kompressor (39) für ein Kondensatorrohrnetz (51), das z. B. in einem zusätzlichen Umluftstrom (65) angeordnet ist, wobei der Verdampfer (41) beiden Kreisläufen (32, 34) gemeinsam ist.

3. Vorrichtung nach Anspruch 1, dadurch gekennzeichnet, daß die Einstellung der Nebenschlüsse (20, 28) und der Öffnungsquerschnitte der Kanäle (3, 5) mittels Luftklappen (25, 23 bzw. 22, 27) erfolgt.

4. Vorrichtung nach einem der Ansprüche 1 bis 3, dadurch gekennzeichnet, daß zwei Wärmepumpenkreisläufe (32, 34) mit einem Kompressor (37) für den Kondensator (45) im zum Innenraum (29) führenden Frischluftkanal (3) und einem Kompressor (39) für das Kondensatornetz (51) sowie ein beiden Kreisläufen (32, 34) gemeinsamer Verdampfer (41) vorgesehen sind.

5. Vorrichtung nach einem der Ansprüche 1 bis 4, dadurch gekennzeichnet, daß die Querschnitte von Frisch- und Abluftkanal (3, 5) sowie der Nebenschlüsse vor (20) und hinter (28) dem Wärmetauscher (9) mittels Luftklappen (25, 23 sowie 22, 27) einstellbar sind.

## Claims

1. An apparatus for ventilating and heating internal rooms, more particularly residential rooms, comprising a fresh-air duct (3) and a used-air duct (5) which lead from the outside into the internal room (29) and from the internal room (29) to the outside and which pass through an air/air heat-exchanger (9), a first blower (19) for blowing air into the internal room (29) being arranged in the fresh-air duct (83) and adjustable bleeder ports (20, 28) being arranged between the fresh-air duct (3) and the used-air duct (5) upstream and downstream of the heat-exchanger (9), characterized in that

— for a pure air/air heat-pump heating operation, both the fresh-air duct (3) and the used-air duct (5) can be closed at the area of the heat exchanger (9) so that then, when the bleeder port (20) upstream of the heat-exchanger (9) is opened, fresh-air can be transported by means of a second blower (21) from the suction opening (7) to the outlet opening (15), which air then flows through the evaporator (41) of the heat-pump, while at the same time, when the bleeder port (28) downstream of the exchanger (89) is opened, the first blower (19) produces a current of circulating air flowing through the condenser (45) of the heat pump form the discharge opening (13) to the inlet opening (11),
— for the pure ventilation, the bleeder ports (20, 28) are closed and the fresh-air duct (3) and the used-air duct (5) are opened so that the blowers (19, 21) carry out a pure heat exchange via the ducts (3, 5) with heat exchanger in the heat-exchanger (9),
— for the mixed operation of heating and ventilation, the bleeder ports (20, 28) and the cross-sections of the ducts (3, 5) are partly opened.

2. An apparatus as claimed in claim 1, characterized in that two heat-pump circulation systems (32, 34) are provided comprising a compressor (37) for a condenser (45) in the fresh-air duct (3) leading to the internal room (29) and a further compressor (39) for a condensor pipe network (51), which is arranged, for example, in an additional current of circulating air (65), the evaporator (41) being common to the two circulation systems (32, 34).

3. An apparatus as claimed in claim 1, characterized in that the adjustment of the bleeder ports (20, 28) and the opening cross-sections of the ducts (3, 5) is effected by means of air valves (25, 23 and 22, 27 respectively).

4. An apparatus as claimed in any one of claims 1 to 3, characterized in that two heat-pump circulation systems (32, 34) are present comprising a compressor (37) for the condenser (45) in the fresh-air duct (3) leading to the internal room (29) and a compressor (39) for the condenser pipe network (51) as well as an evaporator (41) common to the two circulation systems (32, 34).

5. An apparatus as claimed in any one of claims 1 to 4, characterized in that the cross-sections of the fresh-air duct and the used-air duct (3, 5) and of the bleeder ports upstream (20) and downstream (28) of the heat exchanger (9) can be adjusted by means of air valves (25, 23 and 22, 27).

**Revendications**

1. Dispositif pour aérer et chauffer des espaces intérieurs, notamment des locaux d'habitation, à l'aide de canaux d'air frais (3) et d'évacuation (5) s'étendant à partir de l'extérieur vers l'espace intérieur (29) et à partir de l'espace intérieur (29) vers l'extérieur à travers un échangeur de chaleur air-air (9) dans lequel un ventilateur servant à souffler de l'air dans l'espace intérieur (29) est prévu dans le canal d'air frais (3) et des dérivations réglables (20, 28) sont prévues entre le canal d'air frais (3) et le canal d'air d'évacuation (5) avant et derrière l'échangeur de chaleur (9), caractérisé en ce que

— pour uniquement un chauffage à pompes thermiques air-air, tant le canal d'air frais (3) que le canal d'air d'évacuation (5) peuvent être raccordés dans la portée de l'échangeur thermique (9), de sorte que dans le cas d'une dérivation ouverte (20) devant l'échangeur de chaleur (9) de l'air frais peut être demandé à l'aide d'un deuxième ventilateur (21) à partir de l'ouverture d'aspiration (7) vers l'ouverture de soufflage (15) et traverse l'évaporateur (41) de la pompe thermique, alors que simultanément, dans le cas d'une dérivation (28) ouverte derrière l'échangeur de chaleur (9), il s'obtient à partir d'un premier ventilateur (19) un courant de circulation traversant le condensateur (45) de la pompe thermique à partir de l'ouverture d'évacuation (13) vers l'ouverture d'injection (11),

— pour uniquement la ventilation, les dérivations (22, 28) sont fermées et les canaux d'air frais (3) et d'air d'évacuation (5) ouverts, de sorte que les ventilateurs (19, 21) effectuent, à l'aide des canaux (3, 5), un échange d'air pur avec un échange de chaleur dans l'échangeur de chaleur (9),

— pour un régime mélangé comprenant le chauffage et la ventilation, les dérivations (20, 28) et les sections des canaux (3, 5) sont en partie ouvertes.

2. Dispositif selon la revendication 1, caractérisé en ce que deux circuits à pompes thermiques (32, 34) présentant un compresseur (37) pour un condensateur (45) dans le canal d'air frais (3) relié à l'espace intérieur (29) et un autre compresseur (39) pour un réseau de tubes de condensateur (51), qui est par exemple prévu dans un courant de circulation additionnel (65), l'évaporateur (41) étant commun aux deux circuits (32, 34).

3. Dispositif selon la revendication 1, caractérisé en ce que le réglage des dérivations (20, 28) et les sections d'ouverture des canaux (3, 5) s'effectuent à l'aide de clapets à air (25, 32 respectivement 22, 27).

4. Dispositif selon l'une des revendications 1 à 3, caractérisé en ce que deux circuits à pompes thermiques (32, 34) présentant un compresseur (37) pour le condensateur (45) sont prévus dans le canal d'air frais (3) relié à l'espace intérieur (29) et un compresseur (39) pour le réseau de tubes de condensateur (51) ainsi qu'un évaporateur (41) qui est commun aux deux circuits (32, 34).

5. Dispositif selon l'une des revendications 1 à 4, caractérisé en ce que les sections des canaux d'air frais et d'air d'évacuation (3, 5) aussi bien que les dérivations devant (20) et derrière (28) de l'échangeur de chaleur (9) peuvent être réglées à l'aide de clapets à air (25, 23 respectivement 22, 27).